Europäisches Patentamt

(19) European Patent Office

Office européen des brevets

(11) Publication number: **0 232 802 B1**

(12) # EUROPEAN PATENT SPECIFICATION

(45) Date of publication of patent specification :
29.05.91 Bulletin 91/22

(51) Int. Cl.⁵ : **G01K 11/16, F24C 7/08**

(21) Application number : **87101202.7**

(22) Date of filing : **29.01.87**

(54) **Apparatus for monitoring the cooking state of a substance and cooking appliance provided with the same.**

(30) Priority : **10.02.86 IT 4570386**

(43) Date of publication of application :
**19.08.87 Bulletin 87/34**

(45) Publication of the grant of the patent :
**29.05.91 Bulletin 91/22**

(84) Designated Contracting States :
**AT BE DE FR GB IT NL SE**

(56) References cited :
**GB-A- 1 555 130**
**US-A- 2 103 513**

(73) Proprietor : **ZELTRON - Istituto Zanussi per la Ricerca S.p.A.**
**Via Principe di Udine n. 66**
**Campoformido Udine (IT)**

(72) Inventor : **Boscolo, Antonio**
**Via Angelo AMo 33/2**
**I-34144 Trieste (IT)**
Inventor : **Muzzolini, Dario**
**Via Urana 23**
**I-33010 Magnano in Riviera (Udine) (IT)**
Inventor : **Stibelli, Sergio**
**Via della Liburnia 11**
**I-34100 Trieste (IT)**

(74) Representative : **Patentanwälte Grünecker, Kinkeldey, Stockmair & Partner**
**Maximilianstrasse 58**
**W-8000 München 22 (DE)**

## Description

The invention relates to a cooking oven including at least one sensor for insertion into a foodstuff for determining a temperature dependent parameter of the foodstuff and being connected to an electric circuit for switching off the energization of the oven upon receipt of a predetermined signal from the sensor.

Conventional ovens (US-A 21 03 513) of the above kind include a sensor to be inserted into the foodstuff which measures the internal temperature of the foodstuff and switches the energization of the oven off as soon as the sensor indicates a predetermined temperature in the interior of the food stuff. Although, such ovens are much more reliable than ovens without such a sensor, they do not take into account that a well cooked state can only be reached after the interior of the foodstuff has been exposed to a certain temperature for a predetermined time period. Food stuffs of different volumes therefore will have different degrees of cooking when this known oven is switched off.

The invention as claimed is intended to remedy this drawback. It is based on the perception that any foodstuff changes its radiation degree and its refractive index during the cooking process and reaches a stable degree at the end of the process.

Preferred embodiments of the sensors are included in claims 2-3. An optical sensor of the type referred to in claim 3 is already known from GB-A 15 55 130. This known sensor includes a infrared light input, a light output and a tight path in-between the input and the output which consists of a prism-like structure with three reflecting surfaces. The prism is encapsulated into a capsule which includes a liquid. This sensor is used as a thermometer which is based on the theory that the index of refraction of the liquid linearly decreases with the increase of its temperature and therefore the light flux penetrating into the liquid decreases with the increase of its temperature. The attentuation factor between the light input and the light output therefore is dependent on the temperature to be sensed so that the light flux received on the light receiving element is temperature dependent.

Other similar optical sensors are disclosed in GB-A 2141537 and NL-A-8400451.

The characteristics and advantages of the invention will become more clearly evident from the following description, given by way of example with reference to the accompanying drawings, wherein :

Figures 1 and 2 show diagrams illustrating the variations of the transparency of alimentary substances of different nature during the cooking process,

fig. 3 shows a block diagram of a preferred embodiment of the monitoring apparatus provided in a cooking appliance according to the invention, and fig. 4 shows an alternative embodiment as a modification of the monitoring apparatus of fig. 3.

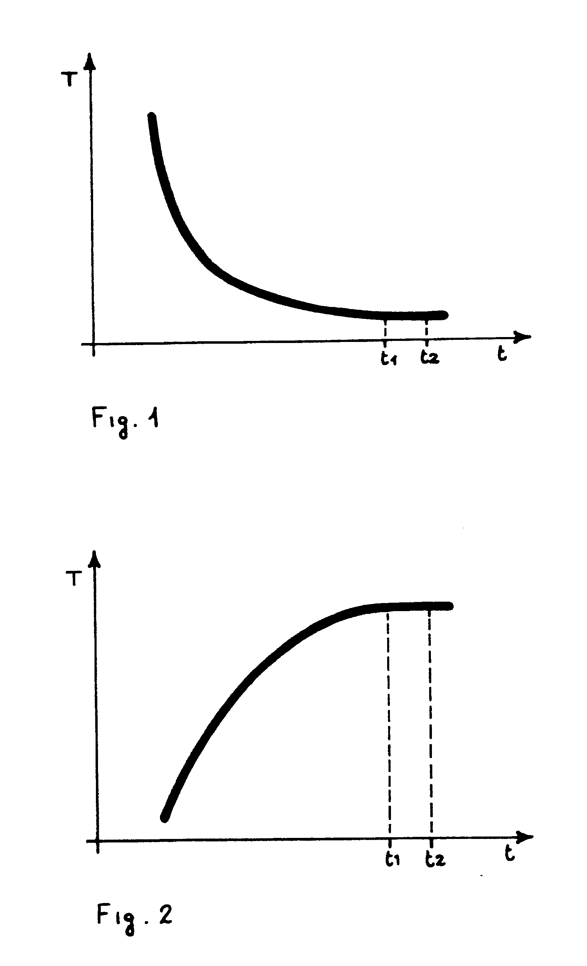

The present invention is based on the also experimentally verified recognition that an alimentary substance being cooked varies its infrared light transparency, and thus the infrared light transmission and reflection coefficients, as the cooking process proceeds. In particular, with reference to fig. 1, proteine-containing alimentary substances such as meat and fish show a diminishing transparency T as the cooking proceeds due to the coagulation of the albumin.

On the other hand, as indicated in fig. 2, all alimentary substances composed of vegetal tissues show an increase of their transparency T due to modifications of the cellulose and amides contained therein.

In each case this shows that the transparency factor T is a parameter intimately connected to the cooking process of an alimentary substance and indicative of the effective cooking state of the respective substance.

In addition, and as also demonstrated in figs. 1 and 2, the variations of the transparency T tend to diminish towards the end of the cooking process to practically zero on termination of this process.

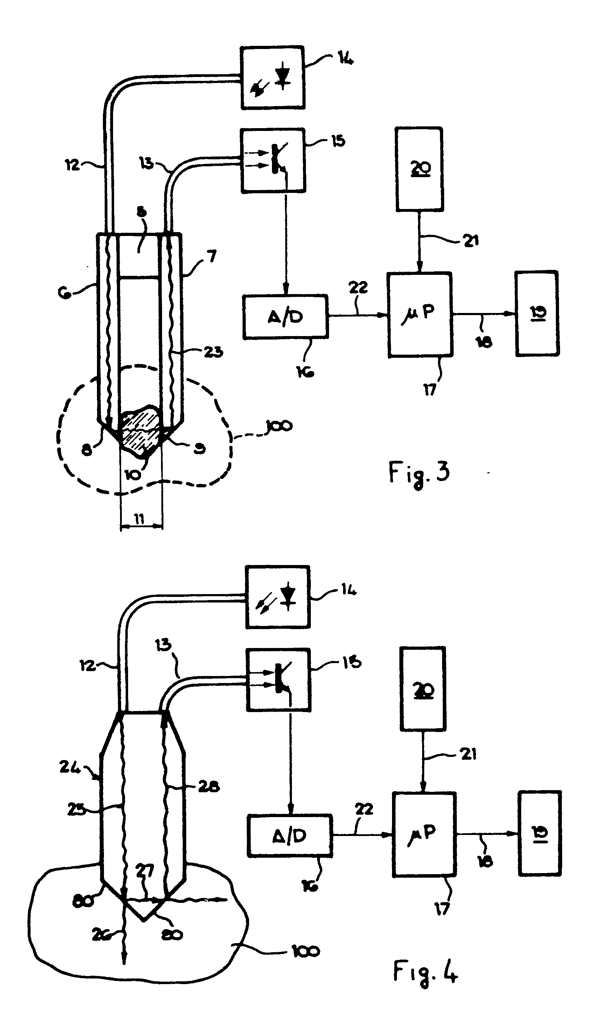

On the base of these considerations the monitoring apparatus according to the invention may preferably be designed as shown in fig. 3, it being understood that the apparatus shown is associated to a cooking appliance of the domestic or industrial type, to a rotary grill, a microwave oven, or a cooking vessel.

The monitoring apparatus substantially comprises a probe in the form of an opaque support body 5 for a light conductor made of glass, quartz, or any other infrared-transparent material. The light conductor is composed of two rod-shaped portions 6 and 7 disposed substantially parallel to one another in mirror- like arrangement and projecting from support body 5 in the form of the prongs of a fork. The projecting ends of light conductor portions 6 and 7 are spaced from one another by a small distance 11 of about 5 to 10 mm, and are formed with reflective wall surfaces 8 and 9, respectively, inclined at an angle of for instance 45 to 60° so as to form total-reflection prisms.

As will become more clearly evident as the description proceeds, the space or interruption 11 between end portions 8 and 9 of the light conductor is adapted to have at least a portion 10 of a food 100 being cooked placed therein, so as to act as a sensor means for sensing the transparency of food portion 10. The other ends of light conductor portions 6 and 7 are connected to optical fibres 12 and 13, respectively, preferably enclosed in a flexible cable and leading to an infrared light source 14 and to an infrared light transducer 15, respectively.

Light conductor portion 6 may thus be connected via optical fibre 12 to at least one light-emitting diode LED 14, while light conductor portion 7 may be connected via optical fibre 13 to at least one phototransistor or photodiode 15. Phototransistor 15 is preferably connected through an analog-digital converter 16 to a control input 22 of a microprocessor 17 pertaining to an electronic program unit for controlling the operation of the cooking appliance to which the apparatus according to the invention is associated. In particular, microprocessor 17 is provided with a control output 18 adapted via a not shown interface unit to control the energization of heater elements 19 of the cooking appliance, and to be programmed by means of a keyboard 20 connected to a setting input 21 of microprocessor 17.

In a per se known manner, for instance in a manner similar to the one described in German Patent Application 28 54 148, microprocessor 17 is designed to store the value of the signals applied to its control input 22 and to periodically compare two successive values to one another. When the difference between two successive values is smaller than a reference value previously set by means of keyboard 20, microprocessor 17 acts to deenergize heater elements 19. In this manner it is possible to automatically terminate the cooking process when food portion 10 is properly cooked, that is, when there is no longer any noticible difference between the values of signals applied to input 22 at successive times t1 and t2. It is to be noted that these considerations apply both in the case of protein-containing foods (fig.1) and in the case of vegetal foods (fig.2), inasmuch as the comparison of successive signals is independent of their absolute value.

Alternatively, heater elements 19 may be deenergized when food portion 10 is still either medium-done or rare, that is, when the difference between the values of signals applied to input 22 at successive times t1 and t2 is smaller than a first and a second predetermined value, respectively, being understood, of course, that the second value is greater than the first.

The operation of the monitoring apparatus according to the invention for controlling microprocessor 17 is as follows : The infrared radiation emitted by LED 14 is transmitted by optical fibre 12 to light conductor portion 6, and therealong to inclined wall surface 8, to be reflected thereby (through food portion 10) towards light conductor portion 7, the inclined wall surface 9 of which again reflects the infrared radiation substantially as indicated by arrow 23. The reflected radiation 23 is transmitted through optical fibre 13 to phototransistor 15, causing the latter to emit an electrical signal in proportion to the intensity of the radiation for controlling microprocessor 17 as already described. It is to be noted that in the described case, in which portion 10 of the substance to be monitored is disposed in gap 11, the monitoring apparatus is "non-invasive".

Preferably, however, the ends of light conductor portions 6 and 7 are properly inserted into the substance to be monitored so as to monitor with maximum accuracy the state of the substance (indicated at 100 by phantom lines) also at locations where treatment is the most difficult. In each case it is noted that the infrared radiation 23 passing through food portion 10 disposed in the space between ends 8 and 9 of light conductor portions 6 and 7 is attenuated in inverse proportion to the transparency of the food. The intensity of the infrared radiation received by phototransistor 15 is thus intimately representative of the cooking state of the food the cooking of which is to be monitored.

As also explained already with reference to the diagrams shown in figs. 1 and 2, the progressive cooking of the food causes the intensity of the infrared radiation received by phototransistor 15 from LED 14 to vary, with the variation rate progressively decreasing towards the end of the cooking process.

The described monitoring apparatus may of course undergo various modification within the scope of the invention.

It may for example be designed as shown in fig. 4, for exclusively monitoring variations of the reflection coefficient of the substance being cooked.

In this case the probe of the monitoring apparatus is formed as a pointed pin 24 of for example circular cross-section made of an infrared-transparent material such as glass or quartz. At one of its ends pin 24 is connected via respective optical fibres 12 and 13 to infrared radiation source 14 and transducer 15. At the opposite end pin 24 is provided with sensor means for sensing the reflectivity of the food 100 to be monitored. These sensor means comprise wall surfaces 80 and 90 of the probe inclined substantially at an angle of 45°, or in any case at an angle somewhat greater than the limit angle between the refractive body 24 and air.

In particular, as pin 24 is adapted to be inserted into the food 100 to be monitored, the optically "active" wall surfaces 80 and 90 define respective dihedrons between the transparent material of probe 24 and the food. As a result, the infrared radiation emitted by source 14, transmitted via optical fibre 12 and incident on wall surface 80 through the material of probe 24 is reflected towards wall surface 90 at a rate directly proportional to the reflection coefficient of food 100 and varying with the progress of the cooking operation as indicated in figs. 1 and 2.

As a matter of fact, the intensity R of the radiation 27 reflected by wall surface 80 may in the per se known manner be expressed by the formula $R = I-P$ (assuming the absorption by the transmitting material 24 to be negligible), where I is the intensity of the radiation 25 incident on wall surface 80, and P is the intensity of the radiation 26 refracted through substance 100. Analogous phenomena occur at active wall surface 90, with the result that the infrared radiation is reflected towards optical fibre 13 and thus towards transducer 15 with a variable intensity, as indicated by arrow 28, in proportion to and intimately related to the cooking state of food 100.

The electric signal generated by transducer 15 in proportion to the intensity of the resultant radiation 28 is processed by microprocessor 17 as already described.

The embodiments shown in figs. 3 and 4 may of course undergo various modifications. By suitably varying the geometry of the respective probe it is for instance possible to employ only one of the active wall surfaces 8 or 9 and 80 or 90, respectively, or to modify the inclination angle of these wall surfaces, as already stated.

In any case it is understood that a cooking appliance provided with a monitoring apparatus according to the invention utilizes the variations of the transparency of the food being cooked for determining the effective cooking state of the food and for deenergizing the heater elements on attaining a differential value previously set as required.

In this way, as previously stated with reference to figs. 1 and 2, not only the temperature values and/or the cooking time, but substantially all the cooking parameters are taken into account. Therefore, the cooking appliance according to the invention terminates the cooking operation when the predetermined cooking state of the food is actually reached.

## Claims

1. Cooking oven including at least one sensor (5-9 ; 24) for contacting a foodstuff (100) in order to determine a temperature dependent parameter of the foodstuff (100) and being connected to an electric circuit (14-20) for switching off the heating element of the oven upon receipt of a predetermined signal from the sensor, **characterized in that** the sensor (5-9 ; 24) is an optical light conductor arrangement having a radiation input path (6) and a radiation output path (7) and a measurement radiation path (11) between the input and the output paths (6, 7), said light conductor arrangement being shaped such that the foodstuff may be brought into contact therewith such as to affect the amount of infra-red radiation transmitted from said input path to said output path in dependence on the cooking state of the foodstuff and the electric circuit (14-20) having an infra-red radiation emitting source (14) connected to the radiation input path (6) and an infra-red radiation detecting element (15) connected to the radiation output path (7) of the sensor, the electric circuit (14-20) being further provided with a means for sampling the radiation output signal at predetermined time intervals, and a circuit (17) for switching off the heating element of the oven when the absolute difference between two successive samples fall below a predetermined value.

2. Cooking oven according to claim 1, **characterized in that** the light conductor arrangement comprises first and second light conductors forming said radiation input path and radiation output path, the radiation path comprises a gap (11) between the radiation input path (6) and the radiation output path (7) into which gap is introduced at least a portion of the foodstuff (100).

3. Cooking oven according to claim 1, **characterized in that** the sensor comprises a single, elongate light conducting body, the end of which is brought into contact with the foodstuff, and which comprises at least two inclined surfaces (80, 90) for partially reflecting radiation from the radiation input path (6) to the radiation output path (7) with reflection degrees dependent on the degree of the refractive index of the foodstuff with the sensor (5-9 ; 24) is in contact.

## Ansprüche

1. Kochherd mit wenigstens einem Sensor (5-9 ; 24), der mit einem Lebensmittel (100) in Berührung zu bringen ist, um einen temperaturabhängigen Parameter des Lebensmittels (100) zu ermitteln, und der mit einer elektrischen Schaltung (14-20) verbunden ist, um das Heizelement des Herdes bei Erreichen eines vorbestimmten Signals von dem Sensor auszuschalten, **dadurch gekennzeichnet,** daß der Sensor (5-9 ; 24) eine optische Lichtleiteranordnung ist, mit einem Strahlungseingangsweg (6) und einem Strahlungsausgangweg (7) und einem Strahlungsmeßweg (11) zwischen den Eingangs- und Ausgangswegen (6, 7), wobei die Lichtleiteranordnung derart gestaltet ist, daß das Lebensmittel damit in Berührung gebracht werden kann, um die Menge von Infrarotstrahlung, die von dem Eingangsweg zu dem Ausgangsweg übertragen wird, in Abhängigkeit vom Garzustand des Lebensmittels zu beeinflussen, und daß die elektrische Schaltung (14-20) eine Infrarotstrahlungsquelle (14), die mit dem Strahlungseingangsweg (6) verbunden ist, und ein Infrarotstrahlungsdetektorelement (15), das mit dem Strahlungsausgangsweg (17) des Sensors verbunden ist, aufweist und die weiterhin mit einer Einrichtung zum Abtasten des Strahlungsausgangssignals in vorbestimmten Zeitintervallen und mit einer Schaltung (17) zum Ausschalten des Heizelements des Herdes, wenn die Absolutdifferenz zwischen zwei aufeinanderfolgenden Abtastwerten unter einen vorbestimmten Wert fällt, versehen ist.

2. Kochherd nach Anspruch 1, **dadurch gekennzeichnet,** daß die Lichtleiteranordnung erste und zweite Lichtleiter enthält, die den Strahlungseingangsweg und den Strahlungsausgangsweg bilden, wobei der Strahlungsweg einen Spalt (11) zwischen dem Strahlungseingangsweg (6) und dem Strahlungsausgangsweg (7) aufweist, in den wenigstens ein Teil des Lebensmittels (100) eingeführt wird.

3. Kochherd nach Anspruch 1, **dadurch gekennzeichnet**, daß der Sensor einen einzigen, länglichen Lichtleitkörper enthält, dessen Ende mit dem Lebensmittel in Berührung gebracht wird und der wenigstens zwei geneigte Flächen (80, 90) aufweist, um teilweise Strahlung vom Strahlungseingangsweg (6) zum Strahlungsausgangsweg (7) mit Reflexionsgraden zu reflektieren, die von dem Grad des Brechungsindex des Lebensmittels abhängen, mit denen der Sensor (5-9 ; 24) in Berührung ist.

## Revendications

1. Four de cuisine comportant au moins un capteur (5-9 ; 24) en contact avec un produit alimentaire (100) afin de déterminer un paramètre du produit alimentaire (100) fonction de la température et raccordé à un circuit électrique (14-20) pour mettre hors circuit l'élément chauffant du four à la réception d'un signal prédéterminé en provenance du capteur, caractérisé en ce que le capteur (5-9 ; 24) est un conducteur de lumière optique ayant un trajet d'entrée de rayonnement (6) et un trajet de sortie de rayonnement (7), et un trajet de rayonnement de mesure (11) entre le trajet d'entrée (6) et le trajet de sortie (7), ce conducteur de lumière étant formé de telle sorte que le produit alimentaire peut être amené en contact avec lui de façon à affecter la quantité de rayonnement infrarouge transmise depuis le trajet d'entrée jusqu'au trajet de sortie en fonction de l'état de cuisson du produit alimentaire, le circuit électrique (14-20) ayant une source émettrice de rayons infrarouges (14) raccordée au trajet d'entrée de rayonnement (6) et un élément détecteur de rayonnement infrarouge (15) raccordé au trajet de sortie du rayonnement (7) du capteur, le circuit électrique (14-20) étant en outre équipé d'un moyen pour échantillonner le signal de sortie de rayonnement à intervalles de temps prédéterminés, et un circuit (17) pour mettre hors circuit l'élément chauffant du four lorsque la différence absolue entra deux échantillons successifs tombe en dessous d'une valeur prédéterminée.

2. Four de cuisine selon la revendication 1, caractérisé en ce que le conducteur de lumière comprend un premier et un deuxième conducteur de lumière formant le trajet d'entrée de rayonnement et le trajet de sortie de rayonnement, en ce que le trajet de rayonnement comprend un intervalle (11) entre le trajet d'entrée de rayonnement (6) et le trajet de sortie de rayonnement (7), et en ce qu'au moins une portion du produit alimentaire (100) est introduite dans cet intervalle.

3. Four de cuisine selon la revendication 1, caractérisé en ce que le capteur comporte un seul corps allongé conducteur de la lumière, dont l'extrémité est amenée en contact avec le produit alimentaire, et qui comprend au moins deux surfaces inclinées (80, 90) pour réfléchir partiellement le rayonnement en provenance du trajet d'entrée de rayonnement (6) sur le trajet de sortie de rayonnement (7), le degré de réflexion étant fonction du degré de l'indice de réfraction du produit alimentaire avec lequel le capteur (5-9 ; 24) est en contact.

Fig. 1

Fig. 2

Fig. 3

Fig. 4